## Europäisches Patentamt
## European Patent Office
## Office européen des brevets

(11) Publication number: **0 179 643**
**B1**

(12) **EUROPEAN PATENT SPECIFICATION**

(45) Date of publication of patent specification: **23.01.91**

(51) Int. Cl.⁵: **G 11 B 15/44,** G 11 B 15/093, G 11 B 5/54

(21) Application number: **85307590.1**

(22) Date of filing: **21.10.85**

(54) Magnetic tape players.

(30) Priority: **20.10.84 JP 220720/84**

(43) Date of publication of application: **30.04.86 Bulletin 86/18**

(45) Publication of the grant of the patent: **23.01.91 Bulletin 91/04**

(84) Designated Contracting States: **DE FR GB**

(56) References cited:
DE-A-2 446 461
FR-A-2 538 151
JP-U-58 094 152
US-A-3 976 263

PATENT ABSTRACTS OF JAPAN, vol. 8, no. 211 (P-303)1648r, 26th September 1984; & JP-A-59 94 270 (TOSHIBA K.K.) 30-05-1984

(73) Proprietor: **SONY CORPORATION**
**7-35 Kitashinagawa 6-Chome Shinagawa-ku Tokyo 141 (JP)**

(72) Inventor: **Takahashi, Kozoh c/o Sony Corporation**
**Patents Division 6-7-35 Kitashinagawa Shinagawa-ku Toyko 141 (JP)**

(74) Representative: **Cotter, Ivan John et al D. YOUNG & CO. 10 Staple Inn London WC1V 7RD (GB)**

Courier Press, Leamington Spa, England.

## Description

This invention relates to magnetic tape players.

Various mechanisms have been proposed for use in cassette tape players to provide automatic reversing of the tape drive direction. Typically, the direction in which the tape is driven is changed automatically or reversed when the tape is unwound completely from a supply reel to a take-up reel during operation in a forward or playback mode of the tape player. Further, manual changing of the direction of tape drive at some point before detection of the tape end (end of the tape) during operation in the playback mode requires the addition of only a few relatively simple parts to such automatic reversing mechanisms. In general, a direction-changing button is mounted in such mechanisms so as to be operable manually for changing the tape drive from the normal direction to the reverse direction, and from the reverse direction to the normal direction, with both such direction changes occurring while the tape player remains in its playback mode established by a forward mode button being held in an operative or depressed position.

In the above mechanism, although the tape drive direction should be changed reciprocally whenever the direction-changing button is operated or the tape end is detected, it is also necessary, for the convenience of the operator, that the tape be driven in the normal direction whenever the forward mode button is initially operated or depressed while the tape player is in a stop mode. Therefore, regardless of the direction in which the tape was being driven before return to the stop mode, it is necessary that the tape be driven in the normal direction when the forward mode button is operated or depressed with the tape player in the stop mode. This requires in addition, a so called "priority device", for example, as disclosed in our copending UK Patent Application Publication No. GB—A—2 148 580 filed 20 September 1984.

In the mechanism disclosed in GB—A—2 148 580, a gear which has an eccentric thereon rotates once through 360° to cause a change lever to move to-and-fro whenever the tape end is detected or the direction-changing button is operated. A slider for changing the tape drive device and a lock lever for locking the slider at one position are reciprocally moved by the to-and-fro movement of the change lever. When the forward mode button resumes its inoperative or inactive position in response to establishing of the stop mode, the lock lever is returned to its inoperative position for releasing the slider. Therefore, the above-mentioned "priority device" function is achieved in a relatively easy way.

However, the typical tape player of today is intended for portable use so that miniaturisation of its size is of importance. It is not desirable in such portable tape players to provide a mechanism including a change lever that is moved to-and-fro whenever a change of tape direction is to occur because this results in wasting of space in the player, especially for the movement of a change lever with a slanted posture as described in the above-identified application.

Several attempts have been made to save space in a tape player by using a gear having a pair of diametrically opposed cutout portions or toothless gaps. For example, as shown in our US Patent No. US—A—3 976 263, an apparatus has been developed for controlling a tape drive device which, in its forward mode, can drive the tape only in a normal direction, and which has a change member movable between first and second positions in response to each turn of a gear through 180°. Although it may be possible to apply this type of gear to the existing mechanism for changing the tape drive direction in the playback mode, substantial modification of such mechanism is required, particularly in achieving the above-mentioned "priority device" function without undesirably increasing the space required therefor in the tape player.

Japanese Utility Model Publication No. JP—U—58 094152 (published 18 December 1981), which corresponds to US Patent No. US—A—4 591 932 (published 27 May 1986), discloses a magnetic tape player according to the first (precharacterising) part of claim 1 of this specification.

The present invention provides a magnetic tape player according to claim 1 of this specification.

A preferred embodiment of the present invention described in detail below provides a mechanism for controlling a tape drive device in a magnetic tape player so as to change the direction in which a tape is driven, and which can satisfy the requirements noted above. Specifically, the mechanism has a "priority device" function, that is it can operate to drive a tape in the normal direction when the forward mode button is initially operated with the tape player in its stop mode, regardless of the direction in which the tape was driven before the stop mode was established. The preferred mechanism can be employed in a portable tape player and can provide automatic and manual reversing operation in the forward or playback mode.

In accordance with the preferred embodiment of the present invention, the apparatus for controlling a tape drive device in a magnetic tape player so as to change the direction of tape drive comprises a cam gear having a pair of diametrically opposed toothless portions or gaps in its periphery, a driving gear engageable with the cam gear to turn the cam gear through 180° upon each such engagement thereof, and a pair of stopper projections on the cam gear which are engageable selectively with a lock or latch member to position the cam gear with one of its gaps facing the driving gear. A pair of diametrically opposed, radially enlarged cam portions and an eccentric cam member also are provided on the cam gear. In order initially to turn the cam gear when the latch member is released from engagement with one of the stopper projections, bias spring means acts against one of the radially enlarged cam portions when one of the toothless portions of the cam gear faces the driving gear. A change lever is mounted to move between first and second positions for selecting the normal and reverse directions, respectively, of the tape drive. A cam follower member and a spring-loaded lock arm are both pivotally mounted on the change lever, with the cam follower member contacting the eccentric cam member, and the spring-loaded lock arm is movable to its operative position for locking the cam follower member at a fixed angle relative to the change lever in response to actuation of a mode selecting lever for establishing the forward or playback mode. When the cam follower member is locked relative to the change lever, the change lever is moved from one to another of its first and second positions for changing the direction in which the tape is driven in response to each turn of the cam gear through 180°. When the cam follower member is pivoted in response to initial rotation of the eccentric cam member without being secured at the fixed angle relative to the change lever by the lock arm, for example when the forward mode is established after the stop mode, the change lever remains at rest and the cam follower member releases the latch member from engagement with one of the stopper projections and permits further turning of the cam gear during which the cam follower member is locked relative to the change lever and the resulting pivotal movement of the change lever causes driving of the tape in the normal direction for the forward mode established from the stop mode. In other words, the change lever is moved reciprocally between first and second positions for changing the direction in which the tape is driven only when the cam follower member is locked by the spring-loaded lock arm in a fixed angular position relative to the change lever.

The invention will now be further described, by way of illustrative and non-limiting example, with reference to the accompanying drawings, in which:

Figure 1 is a plan view of a tape player according to one embodiment of the present invention having an apparatus or mechanism for controlling the tape drive, the player being shown in a stop mode;

Figure 2 is a plan view similar to that of Figure 1, but with a number of the elements removed to more clearly show the condition of the remaining elements with the tape player in a forward mode and arranged for driving the tape in a normal direction;

Figure 3 is another plan view similar to that of Figure 1, but with a number of the elements removed to better illustrate movements effected for changing the direction of the tape drive from the normal direction to a reverse direction while the tape player is in its forward or playback mode;

Figures 4 and 5 are enlarged, fragmentary plan views showing elements of Figures 1 and 2 constituting an automatic mechanism for changing the direction of the tape drive at the tape end;

Figure 6 is a plan view of an automatic mechanism for stopping the driving of the tape at the tape end, that is, for automatic change-over to the stop mode from the playback mode of the player;

Figure 7 is an exploded perspective view of a change lever, a spring frame, a cam follower member and a spring-loaded lock arm of the player embodying the invention, such elements being shown disassembled from each other;

Figure 8 is an elevational view of a magnetic head and its supporting structure in a cassette holder of the tape player embodying the invention; and

Figure 9 is a perspective view of the elements shown in Figure 8, but with the cassette holder shown in a tilted or open position.

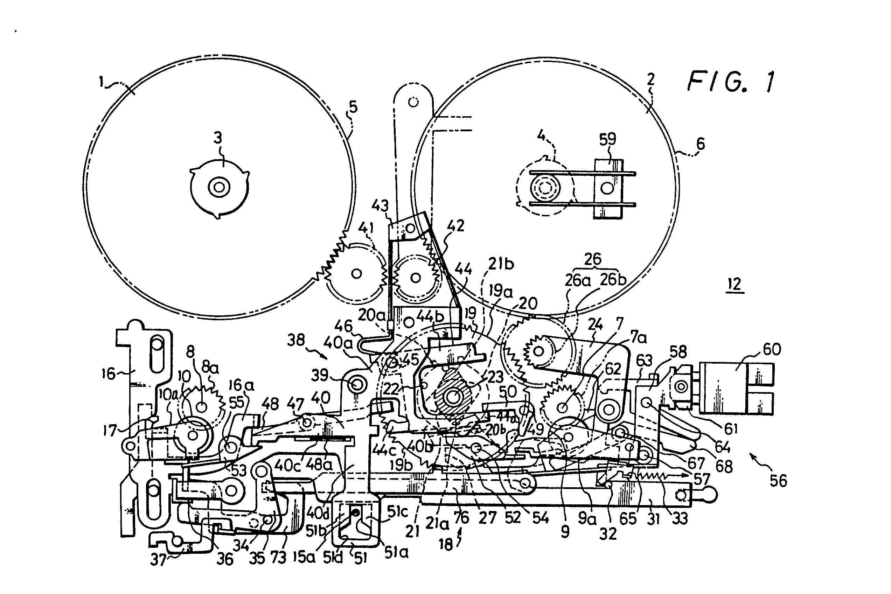

Figure 1 shows a magnetic tape player in which a pair of reel tables 1 and 2 are suitably rotatably mounted and reel spindles 3 and 4 are coupled to the tables 1 and 2, respectively, such as by clutch devices (not shown), so as to rotate therewith. Reel gears 5 and 6 are formed on peripheries of the tables 1 and 2. Capstans 7 and 8 are rotatably mounted at suitable different locations for cooperation with pinch rollers 9 and 10 on pivoted support arms 9a and 10a which are moved selectively to make contact with a respective one of the capstans 7 and 8 so as to drive a tape in a normal direction or a reverse direction, respectively.

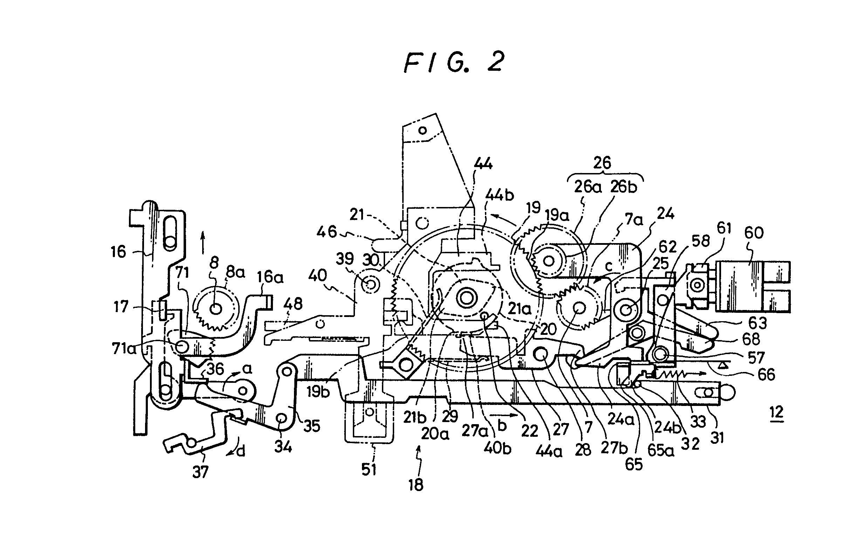

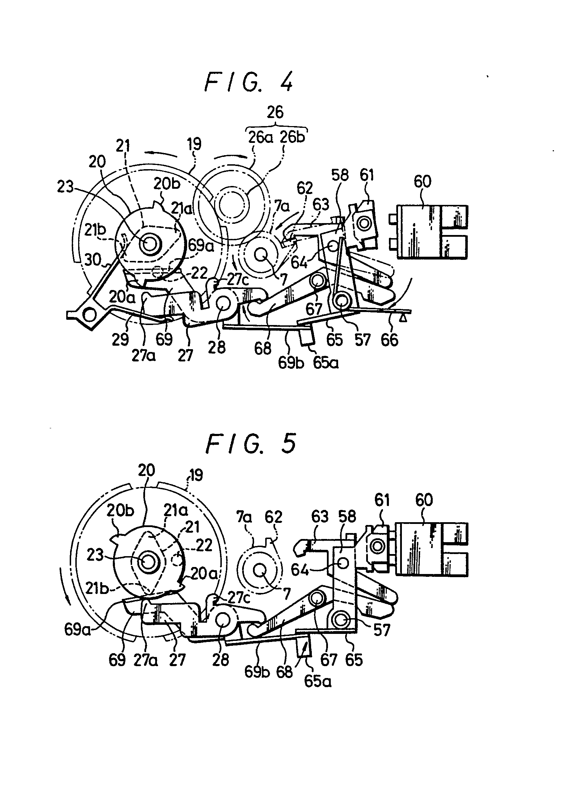

A forward lever 16 is moved in the direction of an arrow shown in Figure 2, in response to actuation of a forward button (not shown), and is held in its operative position by a lock plate 17. A forward mode selecting mechanism 18 will now be described in detail with reference to Figure 2, in which a cam gear 19 is shown to have a pair of toothless portions or gaps 19a and 19b on its periphery, the portions being displaced by 180° from each other. The cam gear 19 has a first cam surface 20 and a second cam surface 21 formed integrally therewith on one side of the cam gear 19. A cam pin 22 extends from the other side of the cam gear 19 at an eccentric position. As shown most clearly in Figures 4 and 5, the cam surface 20 has a pair of diametrically opposed stopper projections 20a and 20b, and the second cam surface 21 is generally diamond-shaped to present opposed pointed surface portions 21a and 21b which are radially aligned with the toothless portions 19a and 19b, respectively. The cam gear 19 is mounted rotatably on a fixed axle 23.

Returning to Figure 2, it will be seen that a pivot lever 24 is mounted pivotally intermediate its ends on a fixed pivot pin 25, and a driving gear 26 is mounted rotatably on one end of the lever 24 adjacent the cam gear 19. The driving gear 26 includes a first gear 26a of relatively large diameter engageable with a flywheel gear 7a integral with the capstan 7, and a second gear 26b of relatively small diameter which is engageable with the cam gear 19. The other end portion of the pivot lever 24 is branched to provide a first arm 24a and a second arm 24b. A lock lever or latch member 27 is mounted pivotally on a fixed pin 28. A claw 27a is formed at one end of the lock lever 27 to engage with one of the stopper projections 20a or 20b, and the other end 27b of the lever 27 is in contact with the first arm 24a of the pivot lever 24 (Figure 2). One actuator arm 29 of a forked spring engages the lock lever 27 and urges the latter in the clockwise direction for contact of the claw 27a with the periphery of the first cam surface 20, and another arm 30 of the forked spring is in contact with the periphery of the second cam surface 21 (Figures 2 and 4). The pivot lever 24 is urged to turn in the anticlockwise direction by a spring 33, so that the second arm 24b thereof makes contact with a pin 32 extending from a transversly movable slider 31. An end of the slider 31 is connected to one end of an L-shaped lever 35 which is mounted pivotally on a fixed pin 34. The other end of the L-shaped lever 35 is in contact with a bent portion 36 of the forward lever 16 (Figure 2). A pivotally mounted direction changing lever 37 is arranged to be turned in the direction of an arrow d in Figure 2 in response to manual actuation of a direction-change button (not shown) when the operator wants to change the direction of the tape drive before the tape end is detected during operation in the playback mode.

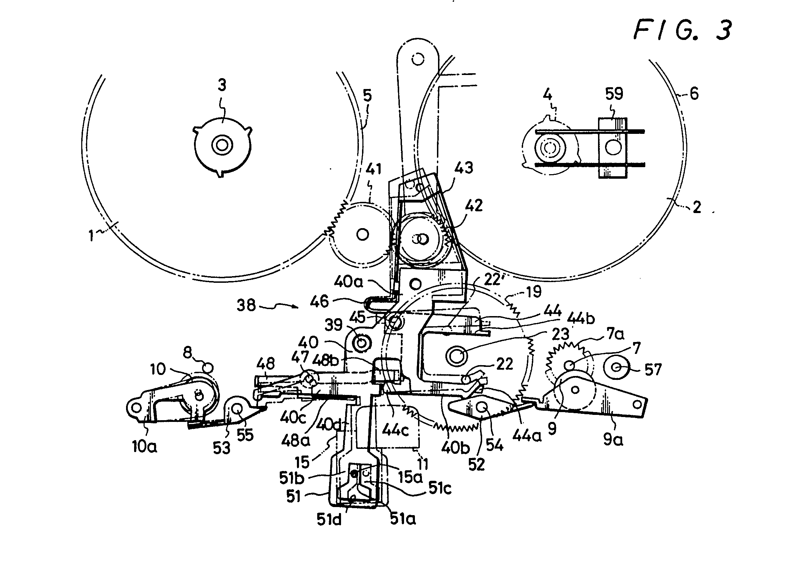

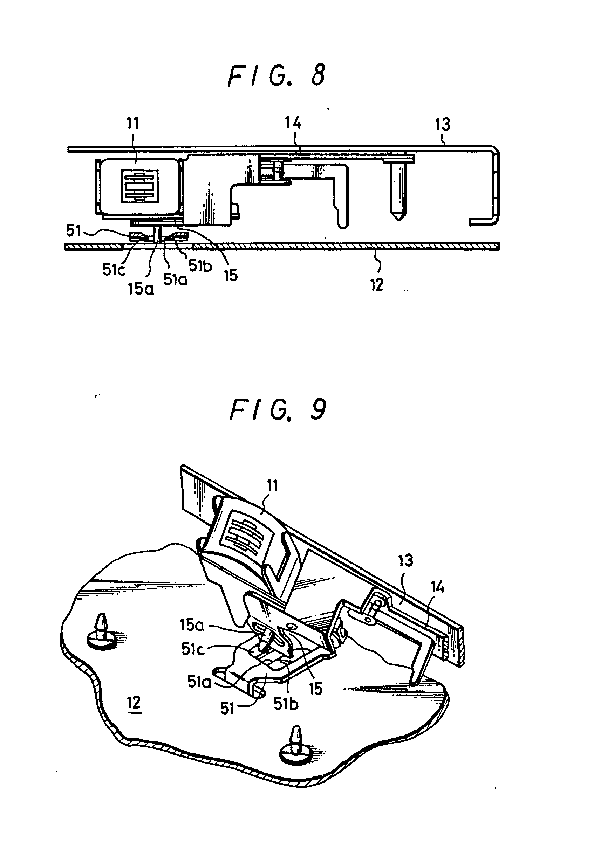

A tape drive mechanism 38 is shown in Figure 3 to comprise a change lever 40 which cooperates with the above-described forward mode selecting mechanism 18 to rotate selectively one of the reel tables 1 and 2 and to move selectively one of the pinch rollers 9 and 10 to engage with the respective one of the capstans 7 and 8. The change lever 40 also is operative to change an azimuth adjust device 15 which will be described later with reference to Figures 8 and 9.

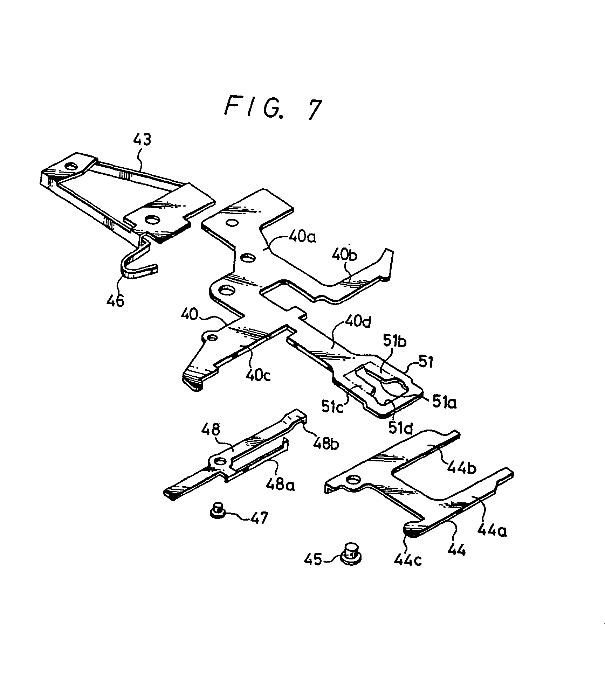

The change lever 40 is mounted pivotally on a fixed pin 39, and a spring frame 43 is attached to one end portion 40a of the lever 40 to move a pulley gear 42 into selective engagement with the reel gear 6 or with an intermediate gear 41 which is always meshed with the reel gear 5. A U-shaped cam follower lever 44 (Figure 7) is mounted pivotally on the change lever 40 by a rivet pin 45 (Figure 3) and is urged to rotate in the anticlockwise direction in Figure 3 by a plate spring 46 extending from the spring frame 43. A lock arm 48 having an extended spring portion 48a is mounted pivotally on the change lever by the rivet pin 47 and is biased by the spring portion 48a in the clockwise direction in Figure 3 so as to cause a bent portion 48b of the lock arm 48 to hold a claw 44c on the lever 44. Therefore, against the force of the plate spring 46, the cam follower lever 44 is locked by the lock arm 48 in a fixed position relative to the change lever 40 where one arm 44a of the cam follower lever 44 is overlapped by an extended arm 40b on the change lever 40. Figure 7 shows details of the change lever 40, spring frame 43, cam follower lever 44 and lock arm 48 when disassembled from each other.

A bell-crank lever 50 is shown in Figure 1 to be rotatably mounted on a fixed pin 49, and to be actuable at one end by the arm 44a so that the other end of the bell-crank lever 50 acts on a nose 27c of the lock lever 27. Therefore, the claw 27a of the lock lever 27 is moved away from one of the projections 20a or 20b when the cam follower lever 44 is pivoted in the anticlockwise direction. On the other hand, the lock arm 48 is turned in the anticlockwise direction against the force of its spring arm 48d by an end 16a of an arm extended from the forward lever 16 when the latter is in its inoperative position as shown in Figure 1.

When the change lever 40 is turned in the clockwise direction around the pin 39, the extended arm 40b causes an intermediate lever 52 pivoted on a pin 54 to rock in an anticlockwise direction (Figure 3), by virtue of which the pinch roller 9 is moved against the capstan 7 to establish the forward mode with the tape being driven in the normal direction. On the other hand, when the change lever 40 is turned in the anticlockwise direction, an extended arm 40c angularly moves an intermediate lever 53 about a pivot pin 55 in the clockwise direction so that the pinch roller 10 is moved by the lever 53 into contact with the capstan 8 to drive the tape in a reverse direction while the player remains in its forward mode.

In the stop mode of the tape player, both the pinch roller support arms 9a and 10a are conventionally spring urged in the directions moving the pinch rollers 9 and 10 away from the capstans 7 and 8 and the arms 9a and 10a urge both intermediate levers 52 and 53 into contact with the arms 40b and 40c, respectively, so that the change lever 40 is held in a neutral position. In this mode, the pulley gear 42 is positioned away from the reel gear 6 and the intermediate gear 41 and, as noted above, the pinch rollers 9 and 10 are positioned away from the capstans 7 and 8.

An automatic mechanism 56 which operates to detect a tape end is shown in Figures 1, 3, 4 and 6 to comprise a solenoid 60 which is suitably energised momentarily at a time when the reel gear 6 stops rotating to cause interruption of a signal from a switch 59 associated with the spindle 4. An armature 61 formed of a permanent magnet is attracted to the core of the solenoid 60 when the solenoid is de-energised, as shown in Figures 1 and 2. A magnetic field is generated momentarily by a core of the solenoid 60 in response to energising of the solenoid and acts to drive the armature 61 away from the solenoid 60 so that a control lever 58 pivoted on a fixed pin 57 and connected to the armature 61 then can be rotated in the anticlockwise direction by the force of a torsion spring 66. The spring 66 is mounted on the fixed pin 57 and acts at its end against the chassis and a pin 64 on the lever 58 (Figure 4). Rotation of the control lever 58 in the anticlockwise direction causes an end of a kick lever 63 pivoted on the pin 64 to be moved to the position shown by dotted lines in Figure 4, in which the kick lever 63 extends into the orbit of a projection 62 extending radially from the hub of the flywheel gear 7a rotating with the capstan 7. Therefore, the kick lever 63 is propelled angularly by the projection 62 in the clockwise direction about the pin 64, and an intermediate lever 68 pivoted on a fixed pin 67 is turned in the clockwise direction by the kick lever 63 and turns the lock lever 27 in the anticlockwise direction so that the claw 27a thereof is moved away from the stopper projection 20a or 20b against the force of the spring arm 29. A return lever 69 is mounted rotatably on the pin 28 to return the control lever 68 to its initial position in which the armature 61 engages the core of the solenoid 60 (Figure 5). More particularly, a cam follower wall 69a formed at an end of the return lever 69 is acted upon by one of the pointed surface portions 21a and 21b of the cam 21 upon rotation of the cam gear 19, as shown in Figure 5. Another end 69b of the return lever 69 is received by a bent portion 65a formed from a wall 65 on the control lever 58.

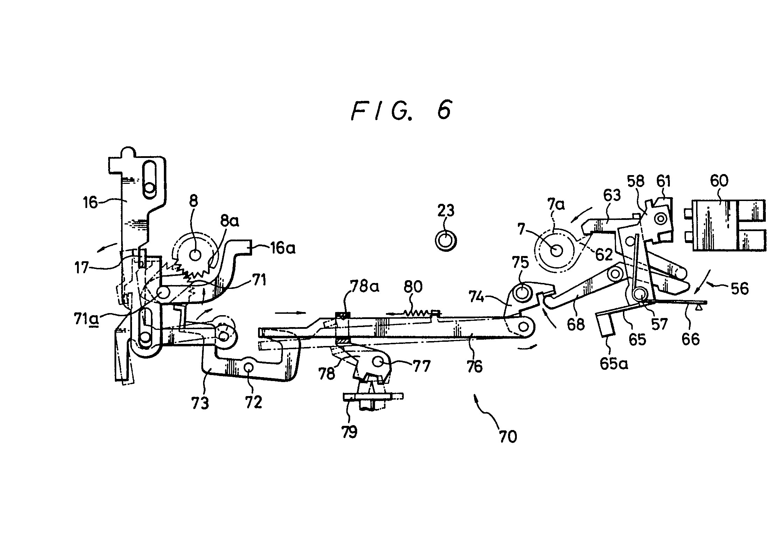

An automatic shut-off mechanism 70 which operates automatically to establish a stop mode of the tape player upon detection of the tape end will now be described with reference to Figure 6. A shut-off gear segment 71 is mounted pivotally on a pin 71a carried by the forward lever 16 and is urged angularly by a spring (not shown) to move to the position shown in Figure 2, that is, away from a flywheel gear 8a which is formed around and rotatable with the capstan 8. A lever 73 which is pivoted on a pin 72 on the chassis is in contact with the shut-off gear segment 71 at one end thereof (Figure 6). A crank lever 74 is mounted pivotally on a fixed pin 75 and has one end pivotally connencted to a slider 76. A spring 80 urges the slider 76 towards the left in Figure 6 so that the other end of the crank lever 75 is urged downwardly into contact with the intermediate lever 68. A select lever 78 is mounted pivotally on a fixed pin 77 and is locked by a slide knob 79 between a first position shown by solid lines and a second position shown by dotted lines in Figure 6. The select lever 78 provides a guide 78a for the slider 76 so that, in response to displacement of the lever 78 to its first and second positions, the slider 76 is disposed in an operative position shown by solid lines or in an inoperative position shown by dotted lines. When the slider 76 is in its operative position, the end thereof remote from the crank lever 74 is engageable with the lever 73. In that case, when the mechanism 56 detects a tape end, the movement of its intermediate lever 68 against the crank lever 74 causes the slider 76 to move towards the right for rocking the lever 73 in a clockwise direction to move the shut-off gear segment 71 into meshing engagement with the flywheel gear 8a, as shown in Figure 6.

Figures 8 and 9 show a cassette holder 13 supported pivotally on a chassis 12 by a suitable pivot structure (not shown) so as to be movable manually from a closed position shown in Figure 8 to an opened or tilted position at which a tape cassette can be inserted or removed. A base plate 14 is mounted pivotally in the cassette holder 13 so that a magnetic head 11 supported on the base plate 14 can be moved to different positions for the playback mode and stop mode of the player. Although the detailed structure thereof is not shown in the drawings, an azimuth adjust mechanism 15 is provided between the magnetic head 11 and the base plate 14. As is well known, an azimuth angle of a magnetic tape path will change slightly in accordance with a change in the direction in which the tape is running. Therefore, in response to changes in the position of a control pin 15a, the azimuth adjust mechanism 15 acts to change slightly the azimuth angle of the magnetic head 11. To change the position of the control pin 15a, an actuator portion 51 is formed at the end of an arm 40d of the change lever 40 (Figures 7 to 9). The actuator portion 51 includes a pair of inclined plates 51b and 51c, which define between them a slot 51a in which the control pin 15a is inserted in the closed position of the cassette holder 13 (Figure 8).

The operation of the above-described embodiment of the invention is as follows:

For establishing a forward mode with the tape driven in the normal direction, the forward lever 16 is moved from the position shown in Figure 1 to its operative position shown in Figure 2, in which it is retained by the lock plate 17. By virtue of such movement of the forward lever 16, a switch (not shown) suitably is turned on for operating a motor by which the capstans 7 and 8 and pulley gear 42 are rotated. Further, the magnetic head 11 is moved suitably into a tape cassette inserted in the cassette holder 13. At the same time, in response to movement of the forward lever 16 to its operative position, the L-shaped lever 35 is turned in the direction of an arrow a (Figure 2), the slider 31 is moved in the direction of an arrow b (Figure 2), and the pivot lever 24 is turned in the direction of an arrow c (Figure 2), with all of these movements being powered by the spring 33 connected to the lever 24. As a result of such movement of the lever 24, the large gear 26a is meshed with the flywheel gear 7a which is rotating together with the capstan 7. Since a toothed portion of the cam gear 19 faces the driving gear 26 when the player is in its stop mode, as shown in Figure 1, the small gear 26b drives the cam gear 19 to rotate the latter at initiation of the forward mode. When the cam gear 19 is rotated to a certain angular position shown in Fig/re 2, the claw 27a of the lock lever or latch member 27 makes contacts with the stopper projection 20a to stop the cam gear 19 and keep it at this position where a toothless portion or gap 19a faces the small gear 26b.

During such turning of the cam gear 19 to that predetermined or certain angular position, the pin 22 of the cam gear 19 pushes against the side surface of the extended arm 40b of the change lever 40, whereby the change lever 40 is turned in the clockwise direction around the pin 39 in Figure 3. Therefore, the pulley gear 42 is moved by the spring frame 43 so as to engage with the reel gear 6, and the intermediate lever 52 is rocked by the extended arm 40b in the anticlockwise direction in Figure 3 so as to cause the pinch roller 9 to make contact with the capstan 7. Further, the control pin 15a shown in Figure 8 is moved to the left by the actuator portion 51 of the change lever 40 to adjust the magnetic head 11 to the posture corresponding to the normal direction of tape movement. Thus, establishment of the forward mode in the normal direction is completed.

The operation for manually changing the direction in which the tape is driven will now be described.

When a direction button (not shown) is operated at any time during operation in the forward mode with the tape being driven in the normal direction, the direction changing lever 37 (Figure 2) is turned in the direction of the arrow $d$. As a result thereof, the L-shaped lever 35 is rotated in the anticlockwise direction opposite to the arrow $a$ and the slider 31 is moved in the direction opposite to the arrow $b$. The pin 32 on the slider 31 pushes the arm 24$b$ of the pivot lever 24 so as to turn it in the direction opposite to the arrow $c$ against the force of the spring 33. Therefore, the arm 24$a$ of the lever 24 pushes the end 27$b$ of the lock lever 27 to turn the latter in the anticlockwise direction around the pin 28. Accordingly, the claw 27$a$ moves away from the stopper projection 20$a$ and then the actuator arm 30 of the forked spring in contact with the pointed surface portion 21$b$ of the cam surface 21 can turn the cam gear 19 slightly to move the gap 19$a$ away from the gear 26$b$.

Upon release of the manual pressure from the direction button (not shown), the direction lever 37 can rock in the direction opposite to the arrow $d$ in Figure 2. Then, the L-shaped lever 35, slider 31 and pivot lever 24 can be moved in the directions of the arrows $a$, $b$ and $c$, respectively, by the force of the spring 33. In response to such movement of the pivot lever 24, the small gear 26$b$ is meshed with the cam gear 19 again and drives it to turn through a certain angle, that is, until the stopper projection 20$b$ is engaged by the claw 27$d$ and the toothless portion 19$b$ of the gear 19 faces the small gear 26$b$.

As shown in Figure 3, during such turning of the cam gear 19, the eccentric pin 22 thereon moves from the position shown in solid lines to the position shown in dotted lines at 22'. At this time, the cam follower lever 44 is locked by the lock arm 48 and unable to pivot around the pin 45 relative to the change lever 40. Therefore, when the eccentric pin 22, in moving to the position 22', pushes against the arm 44$b$ of the lever 44, the change lever 40 is turned in the anticlockwise direction around the pin 39, so that the pulley gear 42 is moved to the left by the spring frame 43 so as to engage the gear 42 with the intermediate gear 41. Such turning of the change lever 40 further causes rocking of the intermediate lever 53 in the clockwise direction about the pin 55 by means of the arm 40$c$ so as to cause the pinch roller 10 to contact the capstan 8, and the control pin 15$a$ is moved to the right by the actuator portion 51 of the change lever 40 to adjust the magnetic head 11 to the posture corresponding to tape drive in the reverse direction. Changing of the direction of tape drive from the normal to the reverse direction thereby is completed.

The above-described direction-changing operation may be initiated manually at any time before the tape end is detected during operation in the forward mode with the tape being driven in either direction. However, upon detection of the tape end, the direction-changing operation is performed automatically as described below in conjunction with Figures 4 and 5. As previously mentioned, the solenoid 60 is energised momentarily when the reel gear 6 stops rotating and, as a result thereof, the signal from the switch 59 (Figure 3) no longer appears. The magnetic field generated momentarily from the core of the solenoid 60 acts to drive the armature 61 away from the solenoid 60 so that the control lever 58 is turned in the anticlockwise direction by the force of the spring 66. In response to such turning of the control lever 58, the end of the kick lever 63 is moved to the position shown by dotted lines in Figure 4, in which it projects into the orbit of projection 62. Thereupon, the kick lever 63 is turned about the pin 64 in the clockwise direction to the position shown in full lines in Figures 4 by the action of the projection 62, and the intermediate lever 68 is rocked in the clockwise direction by the lever 63 so that the claw 27$a$ of the lock lever 27 is moved away from the stopper projection 20$a$ or 20$b$ against the force of the spring arm 29. Then, the cam gear 19 is rotated slightly by the force of the spring arm 30 on the cam surface 21 and the gear 19 is meshed with the small gear 26$b$ which remains in the position shown in dotted lines in Figure 4. Thereafter, the same operations as described previously will be performed for changing the direction of tape drive from the normal direction to the reverse direction.

During the turning of the cam gear 19 by which the change of the tape drive direction is effected, the cam follower wall 69$a$ of the return lever 69 is pushed by the pointed surface portion 21$b$ or 21$a$ of the cam surface 21 so that the arm 69$b$ moves in the direction of the arrow shown in Figure 5 and acts against the wall 65 of the control lever 58 for turning the control lever clockwise about the pin 57. When the control lever 58 thereby is moved back to its initial position shown in Figure 5 against the force of the spring 66, the magnetised armature 61 again will be in contact with the core of the solenoid 60 so as to hold the kick lever 63 out of the orbit of the projection 62.

For the above-described automatic changing mode of operation, the slide knob 79 should be located at the position indicated in dotted lines in Figure 6 to move the free end of the slider 76 downwardly away from engagement with the lever 73. The further change of the tape direction from the reverse direction back to the normal direction can be effected by manual actuation of the direction lever 37 before detection of the tape end, or by automatic operation upon detection of the tape end with the player in its forward mode and the tape being driven in the reverse direction.

The automatic shut-off operation for changing the player from its forward mode with the tape being driven in the normal or reverse direction to the stop mode upon the detection of the tape end is as follows:

To achieve the automatic shut-off operation, the slide knob 79 is preset in the position shown in solid lines in Figure 6.

The momentary energising of solenoid 60, and the movement of the armature 61, control lever 58, kick lever 63, and intermediate lever 68 upon the detection of the tape end, are exactly the same as mentioned previously in the description of the automatic reversing operation. Thus, upon detection of the tape end, the crank lever 74 is turned in the anticlockwise direction about the pin 75 so that the slider 76 is moved to the right against the force of the spring 80. The lever 73, being engageable with the end of the slider 76, is turned in the clockwise direction about the pin 72 so as to push the shut-off gear segment 71 into meshing engagement with the flywheel gear 8a. The shut-off gear segment 71, rotated further by the flywheel gear 8a, acts to kick the lock plate 17 to its inoperative or released position, so that the forward lever 16 is free to be returned to its inoperative position (Figure 1) by a return spring (not shown).

Such return of the forward lever 16 to its inoperative position, from the condition shown in Figure 2, causes turning of the L-shaped lever 36 in the direction opposite to the arrow a, and the slider 31 thereby is moved in the direction opposite to the arrow b, whereupon the lever 35 and slide 31 are retained in the positions shown in Figure 1, which are characteristic of the stop mode. The pin 32 on the slide 31 acts against the arm 24b of the pivot lever 24 to turn the pivot lever in the direction opposite to the arrow c in Figure 2 to the position shown in Figure 1, which is characteristic of the stop mode. In such position of the pivot lever 24, the driving gear 26 is held away from the cam gear 19 and flywheel gear 7a. Therefore, even though the flywheel gear 7a is rotated in the fast-forward and rewind modes of the player, the retention of the pivot lever 24 in the position of Figure 1 for such modes ensures that the cam gear 19 will not be rotated.

When the pivot lever 24 is turned to the position of Figure 1 for the stop mode, the arm 24a in contact with the end 27b of the lock lever 27 moves the lock lever in the anticlockwise direction around the pin 28 to keep the claw 27a away from the stopper projection 20a or 20b in the stop mode. Upon releasing the claw 27a from the stopper projection 20a or 20b, the cam gear 19 is turned slightly by the force of the spring arm 30 against the pointed surface 21a or 21b, so that a toothed portion of the cam gear 19 will face the small gear 26b and the change lever 40 will be moved to its neutral position because the cam pin 22 will be moved away from the arm 40b. In response to the movement of the change lever 40 to its neutral position, the pulley gear 42 will be held in an inoperative position (Figure 1) in which the gear 42 is out of engagement with both the reel gear 6 and the intermediate gear 41, and both the pinch rollers 9 and 10 will be located away from the capstans 7 and 8, respectively, in the stop mode. Further, the movement of the slide 31 to its stop mode position causes the pin 32 thereon to push the bent portion 65a of the control lever 58 for pivoting the control lever against the force of the spring 66 and thereby returning the magnetised armature 61 into contact with the core of the solenoid 60.

Finally, the operation of the above-described embodiment of the invention in achieving the function of a "priority device" will be described. By reason of the "priority device" function, the tape is driven in the normal direction whenever the forward mode button is actuated with the player in its stop mode, regardless of whether the tape was being driven in the normal or reverse direction before the stop mode was established. As previously mentioned in the description of the automatic shut-off mode, when the forward lever 16 is returned to its inoperative position from the condition shown in Figure 2, which shows the forward mode with the tape driven in the normal direction, the cam gear 19 is rotated slightly by the force of the spring arm 30, and the change lever 40 is moved to its neutral position. In this stop mode, because the lock arm 48 is locked in its inoperative position by the return (or downward) movement of the end 16a of the forward lever 16, the cam follower lever 44 is also turned slightly by the force of the spring 46.

When the forward button is actuated again with the player in the stop mode, the eccentric pin 22 on the cam gear 19 will act, in response to turning of the cam gear, to push the arm 44b of the cam follower lever 44. Even though the lock arm 48 will return to its operative position upon the movement of the end 16a of the forward lever 16 coincident with movement of the forward lever to its operative position (Figure 2), the cam follower lever 44 will not be locked relative to the change lever 40 by the lock arm 48, but will be pivoted about the pin 45 relative to the change lever 40 which therefore will remain in its neutral position. Accordingly, no change will occur in the tape drive mechanism 38. However, the crank lever 50 (shown in Figure 1) will be locked by the pivoted movement of the arm 44a and will act on the nose 27c of the lock lever 27 so as to cause the claw 27a to move away from the stopper projection 20b.

Upon further turning of the cam gear 19 by the small gear 26b, the eccentric pin 22 is moved further into contact with the arm 44a of the cam follower lever 44 to pivot the lever 44 about the pin 45 relative to the change lever 40 against the force of the spring 46. When the arm 44a of the cam follower lever 44 thereby is made to overlap the arm 40b of the change lever 40, the claw 44c then will be locked by the lock arm 48, and the change lever 40 thereafter will be pivoted about the pin 39 in the clockwise direction and will be held at the position it occupies when the claw 27a of the lock lever 27 contacts the stopper projection 20a. Thereby, the forward mode with tape drive in the normal direction will be established.

On the other hand, if the stop mode is established at a time when the player is in the forward mode with the tape being driven in the reverse direction, the pin 22 on the cam gear 19 will be located at the position shown in Figure 1 after the slight rotation caused by the spring arm 30. Then, in response to actuation of the forward lever 16, the cam gear 19 will be rotated and the pin 22 will be moved therewith into contact with the arm 44*a* of the cam follower lever 44. By virtue of such movement of the pin 22, the cam follower lever 44 will be locked relative to the change lever 40 by the lock arm 48 and, therefore, the change lever 40 will be held at its pivoted position when the cam gear 19 is locked by the lock lever 27.

As described above, by reason of the "priority device" function a tape will be driven in the normal direction whenever the forward lever 16 is operated with the player in the stop mode, regardless of the direction in which the tape was driven before establishment of the stop mode.

**Claims**

1. A magnetic tape player having a tape drive device selectively operative to drive a tape in normal and reverse directions in a forward mode of the tape player, and apparatus for controlling the tape drive device, said apparatus comprising:

a rotatable cam gear (19) having a toothed periphery with a pair of diametrically opposed gaps (19*a*, 19*b*) therein;

a rotatable driving gear (26) engageable with the toothed periphery of the cam gear (19) for turning the cam gear through at least approximately 180° upon each engagement of the driving gear with the toothed periphery;

a pair of diametrically opposed stopper projections (20*a*, 20*b*) rotatably coupled with the cam gear (19);

a latch member (27) mounted adjacent the cam gear (19) and movable between an engaged position, in which the latch member (27) is engageable with one of the stopper projections (20*a*, 20*b*) for positioning the cam gear (19) in a rest position with one of the gaps (19*a*, 19*b*) facing the driving gear (26), and a released position in which the latch member (27) is disengaged from the stopper projections;

a cam surface (21) on the cam gear (19);

spring means (30) for turning the cam gear (19) from said rest position upon movement of the latch member (27) to said released position;

an eccentric member (22) on the cam gear (19); and

a forward mode selecting member (16);

said apparatus being characterised by:

the cam surface (21) on the cam gear (19) having a pair of diametrically opposed radially enlarged portions (21*a*, 21*b*);

the spring means (30) engaging the cam surface (21) and acting against one of the radially enlarged portions (21*a*, 21*b*) when a respective one of the gaps (19*a*, 19*b*) faces the driving gear (26) for turning the cam gear (19) from said rest position upon movement of the latch member (27) to said released position;

a pivot arm (24) supporting the driving gear (26) and being movable between an operative position in which the driving gear is engageable with the toothed periphery of the cam gear (19) and an inoperative position holding the driving gear away from the toothed periphery;

a change lever (40) movable between first and second operative positions for causing operation of the tape drive device to drive the tape in the normal and reverse directions, respectively, with the tape player in the foward mode;

means that can be acted upon by the eccentric member (22) for moving the change lever (40) betwen the first and second operative positions in response to turning of the cam gear (19) through 180°;

a cam follower member (44) engageable with the eccentric member (22) and mounted pivotally on the change lever (40);

a spring-loaded lock arm (48) also pivotally mounted on the change lever (40) and being movable between a normal operative position for locking the cam follower member (44) relative to the change lever (40) and an inoperative position in which the cam follower member (44) is free to pivot relative to the change lever (40);

the forward mode selecting member (16) having an inactive position, in which the lock arm (48) is displaced to said inoperative position thereof, and being movable to an active position for selecting said forward mode and releasing the lock arm (48) to permit the lock arm to attain said normal operative position; and

means responsive to pivoting of the cam follower member (44) by the eccentric member (22) when the lock arm (48) is in said inoperative position for moving the latch member (27) to said released position.

2. A magnetic tape player according to claim 1, in which said inactive position of the forward mode selecting member (16) corresponds to a stop mode of the tape player, and in which the apparatus comprises means responsive to movement of the forward mode selecting member (16) to said inactive position corresponding to the stop mode for moving the latch member (27) to said released position and the pivot arm (24) to said inoperative position.

3. A magnetic tape player according to claim 2, in which, with the lock arm (48) in said normal operative position for locking the cam follower member (44) relative to the change lever (40), successive turnings of the cam gear (19) through 180° cause movements of the change lever (40) alternately to said first and second operative positions for driving the tape alternately in the normal and reverse directions, respectively, and in which the apparatus comprises means (56) for detecting an end of a tape being driven, and means responsive to each detection of a tape end while the tape player is in the forward mode for displacing the latch member (27) to said released position and thereby permitting the spring means (30) to turn the cam gear (19) from said rest position whereupon the driving gear (26) engages the toothed periphery of the cam gear to complete turning of the cam gear through 180° for changing the tape drive direction.

4. A magnetic tape player according to claim 1, in which, in the forward mode, successive turnings of the cam gear (19) through 180° cause movements of the change lever (40) alternately to said first and second operative positions for driving the tape alternately in the normal and reverse directions, respectively, and in which the apparatus comprises means (56) for detecting an end of a tape being driven, and means responsive to each detection of a tape end while the tape player is in the forward mode for displacing the latch member (27) to said released position and thereby permitting the spring means (30) to turn the cam gear (19) from said rest position whereupon the driving gear (26) engages the toothed periphery of the cam gear to complete turning of the cam gear through 180° for changing the tape drive direction.

5. A magnetic tape player according to claim 3 or claim 4, comprising retaining means (17) for holding the forward mode selecting member (16) in said active position, and automatic shut-off selecting means actuable to release the retaining means (17) from the forward mode selecting member (16) for return of the selecting member (16) to said inactive position corresponding to the stop mode of the player in response to detection of a tape end.

6. A magnetic tape player according to claim 1, in which said inactive position of the forward mode selecting member (16) corresponds to a stop mode of the tape player, and in which the apparatus comprises means operative when the forward mode selecting member (16) is actuated from said inactive position to cause driving of the tape first in the normal direction.

7. A magnetic tape player according to any one of the preceding claims, comprising a magnetic head (11) engageable with a tape being driven, and means actuable by the change lever (40) for changing the azimuth of the head (11) in accordance with changing of said tape drive direction.

8. A magnetic tape player according to any one of the preceding claims, comprising manually actuable direction changing means (37 etc.) operative while the tape player is in the forward mode for momentarily displacing the latch member (27) to said released position and thereby permitting the spring means (30) to turn the cam gear (19) from said rest position whereupon the driving gear (26) engages the toothed periphery of the cam gear to complete turning of the cam gear through 180° for changing the tape drive direction before an end of the tape is detected.

9. A magnetic tape player according to claim 2, in which the lock arm (48), in said normal operative position, is engageable with the cam follower member (44) for locking the cam follower member relative to the change lever (40) only when the cam follower member is in a predetermined angular position relative to the change lever, and in which the apparatus comprises means (52, 53) for disposing the change lever (40) in a neutral position between said first and second operative positions in the stop mode of the tape player, means for urging the cam follower member (44) away from said predetermined angular position relative to the change lever (40) when the lock arm (48) is displaced to said inoperative position in response to said inactive position of the forward mode selecting member (16), and means on the cam follower member (44) engageable by the eccentric member (22) to return the cam follower member (44) to said predetermined angular position relative to the change lever (40) only as a precursor to movement of the change lever with the cam follower member from said neutral position to said first position, whereby the tape always is driven first in the normal direction upon the initiation of the forward mode after the tape player has been in the stop mode.

10. A magnetic tape player according to claim 1, in which the lock arm (48), in said normal operative position, is engageable with the cam follower member (44) for locking the cam follower member relative to the change lever (40) only when the cam follower member is in a predetermined angular position relative to the change lever, and in which the apparatus comprises means (52, 53) for disposing the change lever (40) in a neutral position between said first and second operative positions upon movement of the forward mode selecting member (16) to said inactive position for establishing a stop mode of the tape player, means for urging the cam follower member (44) away from said predetermined angular position relative to the change lever (40) when the lock arm (48) is in said inoperative position, and means on the cam follower member (44) engageable by the eccentric member (22) to return the cam follower member (44) to said predetermined angular position relative to the change lever only as a precursor to movement of the change lever with the cam follower member from said neutral position to said first position, whereby the tape always is driven first in the normal direction upon the initiation of the forward mode after the stop mode.

**Patentansprüche**

1. Magnetbandabspielgerät mit einer Bandantriebsvorrichtung, mit deren Hilfe ein Band in dem Vorwärtsmodus des Geräts wahlweuse in normaler oder in umgekehrter Richtung antreibbar ist, sowie eine zur Steuerung der Bandantriebsvorrichtung dienende Steuervorrichtung mit folgenden Teilen:

einem drehbaren Nockenzahnrad (19) mit einer Umfangsverzahnung in der sich zwei einander diametral gegenüberliegende Lücken (19a, 19b) befinden,

einen drehbaren Antriebszahnrad (26), das mit der Umfangsverzahnung des Nockenzahnrads (19) in Eingriff bringbar ist, so daß letzteres bei jedem Eingriff des Antriebszahnrads mit der Umfangsverzahnung um wenigstens etwa 180° gedreht wird,

zwei einander diametral gegenüberliegenden Anschlagvorsprügen (20a, 20b), die mit dem Nockenzahnrad (19) drehfest gekuppelt sind,

einem Verriegelungsglied (27), das in der Nähe des Nockenzahnrads (19) montiert und zwischen einer Eingriffsposition und einer Lösestellung bewegbar ist, wobei es in der Eingriffsposition mit einem der Anschlagvorsprünge (20a, 20b) in Eingriff bringbar ist, um das Nockenzahnrad (19) in einer Ruhestellung zu positionieren, in der eine der genannten Lücken (19a, 19g) dem Antriebszahnrad (26) gegenüberliegt, und wobei das Verriegelungsglied (27) in der Lösestellung von den Anschlagvorsprüngen gelöst ist,

einer an dem Nockenzahnrad (19) ausgebildeten Nockenfläche (21),

Federmitteln (30), die das Nockenzahnrad (19) bei der Bewegung des Verriegelungsglieds (27) aus der Ruhestellung drehen, wenn das Verriegelungsglied (27) in die Lösestellung bewegt wird,

einem Exzenterglied (22) an dem Nockenzahnrad (19),

und einem Wählglied (16) zur Auswahl des genannten Vorwärtsmodus,

wobei die Steuervorrichtung dadurch gekennzeichnet ist,

daß an der Nockenfläche (21) des Nockenzahnrad (19) zwei einander diametral gegenüberliegende radial vergrößerte Abschnitte (21a, 21b) vorgesehen sind,

daß die Federmittel (30) an der Nockenfläche (21) angreifen und auf einen der radial vergrößerten Abschnitte (21a, 21b) derart einwirken, daß sie bei der Bewegung des Verriegelungsglieds (27) aus der Ruhestellung in die Lösestellung das Nockenzahrad (19) drehen, wenn die betreffende Lücke (19a, 19b) dem Antriebszahnrad (26) gegenüberliegt,

daß ein Schwenkarm (24) vorgesehen ist, der das Antriebszahnrad (26) trägt und der bewegbar ist zwischen einer Arbeitsstellung, in der das Antriebszahnrad mit der Umfangsverzahnung des Nockenzahnrads (19) in Eingriff bringbar ist, und einer Ruhestellung, in der er das Antriebszahnrad von der Umfangsverzahnung im Abstand hält,

daß ein Umsteuerhebel (40) vorgesehen ist, der Zwischen einer ersten und einer zweiten Arbeitsstellung bewegbar ist, wobei er die Bandantriebsvorrichtung so betätigt, daß diese das Band in normaler bzw. umgekehrter Richtung antreibt, wenn das Magnetbandabspielgerät sich im Vorwärtsmodus befindet,

daß Mittel vorgesehen sind, auf die das Exzenterglied (22) einwirken kann, um den Umsteuerhebel (40) in Abhängigkeit von einer Drehung des Nockenzahnrads (19) um 180° zwischen seiner ersten und seiner zweiten Arbeitsstellung zu bewegen,

daß ein Nockenabtastglied (44) vorgesehen ist, das mit dem Exzenterglied (22) in Eingriff bringbar ist und das an dem Umsteuerhebel (40) schwenkbar montiert ist,

daß ein federbelasteter Verriegelungsarm (48) vorgesehen ist, der ebenfalls schwenkbar an dem Umsteuerhebel (40) montiert ist und bewegbar ist zwischen einer normalen Arbeitsstellung zur Verriegelung des Nockenabtastglieds (44) relativ zu dem Umsteuerhebel (40) und einer Ruhestellung, in der das Nockenabtastglied (44) gegenüber dem Umsteuerhebel (40) frei drehbar ist,

daß das Vorwärtsmodus-Wählglied (16) eine inaktive Position besitzt, in der der Verriegelungsarm (48) in seine unwirksame Position verschoben ist,

daß das Vorwärtsmodus-Wählglied (16) in eine aktive Position bewegbar ist, in der es die Auswahl des Vorwärtsmodus bewirkt und den Verriegelungsarm (48) freigibt, so daß dieser in seine normale Arbeitsstellung gelangen kann,

und daß Mittel vorgesehen sind, die auf das Verschwenken des Nockenabtastglieds (44) durch das Exzenterglied (22) ansprechen, wenn der Verriegelungsarm (48) sich in seiner inaktiven Position befindet, um das Verriegelungsglied (27) in die Lösestellung zu bewegen.

2. Magnetbandabspielgerät nach Anspruch 1, bei dem die inaktive Position des Vorwärtsmodus-Wählglieds (16) einem Stop-Modus des Magnetbandabspielgeräts entspricht, und bei dem die Steuervorrichtung Mittel aufweist, die auf die Bewegung des Vorwärtsmodus-Wählglieds (16) in seine dem Stop-Modus entsprechende inaktive Position ansprechen, um das Verriegelungsglied (27) in die Lösestellung und den Schwenkarm (24) in seine unwirksame Position zu bewegen.

3. Magnetbandabspielgerät nach Anspruch 2, bei dem dann, wenn der Verriegelungsarm (48) sich in seiner normalen Arbeitsstellung befindet, um das Nockenabtastglied (44) relativ zu dem Umsteuerhebel (40) zu verriegeln, aufeinanderfolgende Drehungen des Nockenzahnrads (19) um 180° Bewegungen des Umsteuerhebels (40) abwechselnd in die erste und die zweite Arbeitsstellung hervorrufen, um das Band abwechselnd in normaler bzw. in umgekehrter Richtung anzutreiben, und bei dem die Steuervorrichtung Mittel (56) aufweist, die das Erreichen des Bandendes eines angetriebenen Bandes erfassen, sowie Mittel, die dann, wenn das Magnetbandabspielgerät sich im Vorwärtsmodus befindet, bei jeder Erfassung eines Bandendes in der Weise ansprechen, daß sie das Verriegelungsglied (27) in die Lösestellung verschwenken, und es damit den Federmitteln (30) ermöglichen, das Nockenzahnrad (19) aus seiner Ruhestellung zu drehen, woraufhin das Antriebszahnrad (26) in die Umfangsverzahnung des Nockenzahnrads eingreift, um das Drehen des Nockenzahnrads um 180° zu vervollständigen und dadurch die Bandantriebsrichtung zu wechseln.

4. Magnetbandabspielgerät nach Anspruch 1, bei dem im Vorwärtsmodus des Geräts aufeinanderfolgende Drehungen des Nockenzahnrads (19) um 180° bewirken, das der Umsteuerhebel (40) abwechselnd in die erste und die zweite Arbeitsstellung bewegt wird, um das Band abwechselnd in normaler bzw. in umgekehrter Richtung anzutreiben, und bei dem die Steuervorrichtung Mittel (56) aufweist, die das Erreichen des Bandendes eines angetriebenen Bandes erfassen, sowie Mittel, die dann, wenn das Magnetbandabspielgerät sich im Vorwärtsmodus befindet, auf jede Erfassung eines Bandendes in der Weise reagieren, daß sie das Verriegelungsglied (27) in die Lösestellung verschwenken, und es damit den Federmitteln (30) ermöglichen, das Nockenzahnrad (19) aus seiner Ruhestellung zu drehen, woraufhin das Antriebszahnrad (26) in die Umfangsverzahnung des Nockenzahnrads eingreift, um das Drehen des Nockenzahnrads um 180° zu vervollständigen und dadurch die Bandantriebsrichtung zu wechseln.

5. Magnetbandabspielgerät nach Anspruch 3 oder 4, mit Haltemitteln (17), die das Vorwärtsmodus-Wählglied (16) in seiner aktiven Position halten, sowie mit automatischen Sperr-Wählmitteln, die bei der Erfassung eines Bandendes in der Weise betätigbar sind, daß sie die Haltemittel (17) von dem Vorwärtsmodus-Wählglied (16) lösen und es in seine dem Stop-Modus des Magnetbandabspielgerät entsprechende inaktive Position zurückzuführen.

6. Magnetbandabspielgerät nach Anspruch 1, bei dem die inaktive Position des Vorwärtsmodus-Wählglieds (16) einem Stop-Modus des Magnetbandabspielgeräts entspricht, und bei dem die Steuervorrichtung Mittel aufweist, die wirksam werden, wenn das Vorwärtsmodus-Wählglieds (16) aus seiner inaktiven Position herausgeführt wird, und bewerken, daß das Band zunächst in der normalen Richtung angetrieben wird.

7. Magnetbandabspielgerät nach einem der vorhergehenden Ansprüche, mit einem Magnetkopf (11) der mit einem angetriebenen Band in Kontakt gebracht werden kann, sowie mit von dem Umsteuerhebel (40) betätigbaren Mitteln zur Azimutänderung des Kopfes (11) in Abhängigkeit von einem Wechsel der Bandantriebsrichtung.

8. Magnetbandabspielgerät nach einem der vorhergehenden Ansprüche, mit manuell betätigbaren Mitteln (37 usw.) zur Richtungsänderung, die im Vorwärtsmodus des Magnetband abspielgeräts wirksam sind und die eine sofortige Verschiebung des Verriegelungsglieds (27) in die Lösestellung bewirken, so daß die Federmittel (30) das Nockenzahnrad (19) aus der Ruhestellung herausgedreht werden kann, woraufhin das Antriebszahnrad (26) in die Umfangsverzahnung des Nockenzahnrads eingreift, um die Drehung des Nockenzahnrads um 180° zu vervollständigen und die Bandantriebsrichtung vor dem Erfassen des Bandendes zu wechseln.

9. Magnetbandabspielgerät nach Anspruch 2, bei dem der Verriegelungsarm (48) in der genannten normalen Arbeitsstellung nur dann an dem Nockenabtatsglied (44) angreifen kann, um dieses relativ zu dem Umsteuerarm (40) zu verriegeln, wenn das Nockenabtastglied relative zu dem Umsteuerarm ein vorbestimmte Winkelstellung einnimmt, und bei dem die Steuervorrichtung Mittel (52, 53) aufweist, die den Umsteuerhebel (40) im Stop-Modus des Magnetband abspielgeräts in einer zwischen seiner ersten und seiner zweiten Arbeitsstellung liegende neutrale Stellung anordnen, ferner Mittel, die das Nockenabtastglied (44) aus der vorbestimmten relativen Winkelstellung zum dem Umsteuerhebel (40) wegdrücken, wenn der Verriegelungsarm (48) in Abhängigkeit von der inaktiven Position des Vorwärtsmodus-Wählglieds (16) in seine unwirksame Position verschoben ist, sowie Mittel an dem Nockenabtastglied (44), an denen das Exzenterglied (22) angreifen kann, um das Nockenabtastglied (44) in die vorbestimmte Winkelposition relative zu dem Umsteuerhebel (40) zurückzuführen und zwar nur als Vorläufer zu der Bewegung des Umsteuerhebels mit dem Nockenabtastglied aus der genannten neutralen Position in die erste Arbeitsstellung, so daß das Band zunächst stets in der normalen Richtung angetrieben wird, wenn der Vorwärtsmodus begonnen wird, nachdem das Magnetbandabspielgerät sich im Stop-Modus befunden hat.

10. Magnetbandabspielgerät nach Anspruch 1, bei dem der Verriegelungsarm (48) in der genannten normalen Arbeitsstellung nur dann an dem Nockenabtastglied (44) angreifen kann, um dieses relativ zu dem Umsteuerarm (40) zu verriegeln, wenn bei der Bewegung des Vorwärtsmodus-Wählglieds (16) in die inaktive Position das Nokkenabtastglied relativ zu dem Umsteuerarm eine vorbestimmte Winkelstellung einnimmt, um das Magnetbandabspielgerät in einen Stop-Modus zu führen, und bei dem die Steuervorrichtung Mittel (52, 53) aufweist, die den Umsteuerhebel (40) im Stop-Modus des Magnetbandabspielgeräts in einer zwischen seiner ersten und seiner zweiten Arbeitsstellung liegende neutrale Stellung anordnen, ferner Mittel, die das Nockenabtastglied (44) aus der vorbestimmten Winkelstellung relativ zu dem Umsteuerhebel (40) wegdrücken, wenn der Verriegelungsarm (48) in Abhängigkeit von der inaktiven Position des Vorwärtsmodus-Wählglieds (16) in seine unwirksame Position verschoben ist, sowie Mittel an dem Nockenabtastglied (44), an denen das Exzenterglied (22) angreifen kann, um das Nockenabtastglied (44) in die vorbestimmte Winkelposition relativ zu dem Umsteuerhebel (40) zurückzuführen und zwar nur als Vorläufer zu der Bewegung des Umsteuerhebels mit dem Nockenabtastglied aus der genannten neutralen Position in die erste Arbeitsstellung, so daß das Band bei der Einleitung des Vorwärtsmodus nach dem Stop-Modus stets in der normalen Richtung angetrieben wird.

**Revendications**

1. Lecteur d'enregistrements sur bande magnétique, ayant un dispositif d'entraînement de bande destiné à assurer sélectivement l'entraînement d'une bande dans le sens normal et en sens inverse, en mode d'avance du lecteur, et un appareil de commande du dispositif d'entraînement de bande, l'appareil comprenant:

un pignon rotatif de came (19) ayant une périphérie dentée comprenant deux espaces diamétralement opposés (19a, 19b),

un pignon menant rotatif (26) destiné à coopérer avec la périphérie dentée du pignon de came (19) afin qu'il fasse tourner le pignon de came d'au moins 180° environ à chaque coopération du pignon menant avec la périphérie dentée,

deux saillies diamétralement opposées d'arrêt (20a, 20b) couplées afin qu'elles tournent avec le pignon de came (19),

un organe de verrouillage (27) monté près du pignon de came (19) et mobile entre une position de coopération dans laquelle l'organe de verrouillage (27) est au contact de l'une des saillies d'arrêt (20a, 20b) et positionne le pignon de came (19) en position de repos dans laquelle l'un des espaces (19a, 19b) est en face du pignon menant (26), et une position libérée dans laquelle l'organe de verrouillage (27) est séparé des saillies d'arrêt,

une surface de came (21) formée sur le pignon de came (19),

un ressort (30) destiné à faire tourner le pignon de came (19) à partir de la position de repos lors du déplacement de l'organe de verrouillage (27) vers la position libérée,

un organe excentrique (22) placé sur le pignon de came (19), et

un organe (16) de sélection de mode d'avance, l'appareil étant caractérisé en ce que

la surface de came (21) formée sur le pignon de came (19) a deux parties diamétralement opposées et radialement agrandies (21a, 21b),

le ressort (30) est au contact de la surface de came (21) et agit contre l'une des parties radialement agrandies (21a, 21b) lorsqu'un espace respectif (19a, 19b) est en face de pignon menant (26), afin qu'il fasse tourner le pignon de came (19) à partir de la position de repos lors du déplacement de l'organe de verrouillage (27) vers la position libérée,

un bras pivotant (24) supporte le pignon menant (26) et est mobile entre une position de fonctionnement dans laquelle le pignon menant est destiné à coopérer avec, la périphérie dentée du pignon de came (19) et une position inactive dans laquelle le pignon menant est maintenu à distance de la périphérie dentée,

un levier (40) de changement est mobile entre une première et une seconde position de travail et est destiné à provoquer le fonctionnement du dispositif d'entraînement de bande afin qu'il entraîne la bande dans le sens normal et en sens inverse respectivement lorsque le lecteur est en mode d'avance,

un dispositif est destiné à être commandé par l'organe excentrique (22) et à déplacer le levier (40) de changement entre la première et la seconde position de travail à la suite de la rotation du pignon de came (19) de 180°,

un organe (44) formant toucheau de came est destiné à coopérer avec l'organe excentrique (22) et est monté afin qu'il puisse pivoter sur le levier de changement (40),

un bras de blocage (48) rappelé par un ressort est lui aussi monté sous forme articulée sur le levier (40) de changement, ce bras étant mobile entre une position normale de travail dans laquelle il bloque l'organe de toucheau de came (44) par rapport au levier de changement (40) et une position inactive dans laquelle l'organe de toucheau de came (44) est libre de pivoter autour du levier de changement (40),

l'organe (16) de sélection de mode d'avance a une position inactive dans laquelle le bras de blocage (48) est déplacé vers sa position inactive, et est mobile vers une position active afin qu'il sélectionne le mode d'avance et libère le bras de blocage (48) en permettant ainsi au bras de blocage d'atteindre la position normale de travail, et

un dispositif est commandé par le pivotement de l'organe de toucheau de came (44) sous l'action de l'organe excentrique (22) lorsque le bras de blocage (48) est en position inactive, afin que l'organe de verrouillage (27) soit déplacé vers la position libérée.

2. Lecteur d'enregistrements sur bande magnétique selon la revendication 1, dans lequel la position inactive de l'organe (16) de sélection de mode d'avance correspond à un mode d'arrêt du lecteur, et dans lequel l'appareil comporte un dispositif commandé par le déplacement de l'organe (16) de sélection de mode d'avance vers la position inactive, correspondant au mode d'arrêt, et destiné à déplacer l'organe de verrouillage (27) vers la position libérée et le bras pivotant (24) vers la position inactive.

3. Lecteur d'enregistrements sur bande magnétique selon la revendication 2, dans lequel, lorsque le bras de blocage (48) est dans la position normale de travail dans laquelle il bloque l'organe de toucheau de came (44) par rapport au levier de changement (40), des rotations successives du pignon de came (19) de 180° provoquent des déplacements du levier de changement (40) en alternance vers la première et la seconde position de travail et l'entraînement de la bande en alternance dans les sens normal et inverse respectivement, et dans lequel l'appareil comporte un dispositif (56) de détection de la fin de la bande entraînée, et un dispositif commandé par chaque détection de fin de bande lorsque le lecteur est en mode d'avance et destiné à déplacer l'organe de verrouillage (27) vers la position libérée et à permettre ainsi au ressort (30) de faire tourner le pignon de came (19) à partir de la position de repos, le pignon d'entraînement (26) coopérant ensuite avec la périphérie dentée du pignon de came afin qu'il assure la rotation du pignon de came de 180° permettant le changement de sens d'entraînement de la bande.

4. Lecteur d'enregistrements sur bande magnétique selon la revendication 1, dans lequel, en mode d'avance, les rotations successives du pignon de came (19) de 180° provoquent des déplacements du levier de changement (40) en alternance vers la première et la seconde position de travail afin que la bande soit entraînée en alternance dans les sens normal et inverse respectivement, et dans lequel l'appareil comporte un dispositif (56) de détection d'une fin de la bande entraînée, et un dispositif commandé par chaque détection de fin de la bande, lorsque le lecteur est en mode d'avance, et destiné à déplacer l'organe de verrouillage (27) vers la position libérée et ainsi à permettre au ressort (30) de faire tourner le pignon de came (19) depuis la position de repos, le pignon menant (26) coopérant ensuite avec la périphérie dentée du pignon de came en terminant la rotation du pignon de came de 180° pour le changement de sens d'entraînement de la bande.

5. Lecteur d'enregistrements sur bande magnétique selon la revendication 3 ou 4, comprenant un dispositif (17) de retenue destiné à maintenir l'organe (16) de sélection de mode d'avance en position de travail, et un dispositif de sélection d'arrêt automatique destiné à être commandé afin qu'il libère le dispositif de retenue (17) de l'organe (16) de sélection de mode d'avance afin que l'organe de sélection (16) revienne vers la position inactive correspondant au mode d'arrêt du lecteur à la suite de la détection d'une fin de bande.

6. Lecteur d'enregistrements de bande magnétique selon la revendication 1, dans lequel la position inactive de l'organe (16) de sélection de mode d'avance correspond à un mode d'arrêt du lecteur, et dans lequel l'appareil comporte un dispositif commandé lorsque l'organe 16) de sélection de mode d'avance est manoeuvré à partir de sa position inactive de manière que la bande soit entraînée initialement dans le sens normal.

7. Lecteur d'enregistrements sur bande magnétique selon l'une quelconque des revendications précédentes, comprenant une tête magnétique (11) destinée à coopérer avec une bande entraînée, et un dispositif destiné à être commandé par le levier de changement (40) et destiné à modifier l'azimut de la tête (11) en fonction du changement de sens d'entraînement de la bande.

8. Lecteur d'enregistrements sur bande magnétique selon l'une quelconque des revendications précédentes, comprenant un dispositif manuel de changement de sens (37,...) commandé lorsque le lecteur est en mode d'avance et destiné à déplacer temporairement l'organe de verrouillage (27) vers la position libérée et ainsi à permettre au ressort (30) de faire tourner le pignon de came (19) depuis la position de repos, le pignon d'entraînement (26) coopérant alors avec la périphérie dentée du pignon de came et complétant la rotation du pignon de came de 180° afin que le sens d'entraînement de la bande soit changé avant la détection d'une fin de bande.

9. Lecteur d'enregistrements sur bande magnétique selon la revendication 2, dans lequel le bras de blocage (48), dans la position normale de travail, est destiné à coopérer avec l'organe de toucheau de came (44) afin qu'il bloque cet organe par rapport au levier de changement (40) uniquement lorsque l'organe de toucheau de came est dans une position angulaire prédéterminée par rapport au levier de changement, et dans lequel l'appareil comporte un dispositif (52, 53) destiné à mettre le levier de changement (40) en position neutre entre la première et la seconde position de travail, en mode d'arrêt du lecteur, un dispositif destiné à écarter l'organe (44) de toucheau de came de la position angulaire prédéterminée par rapport au levier de changement (40) lorsque le bras de blocage (48) est déplacé vers sa position inactive à la suite de la mise de l'organe (16) de sélection de mode d'avance en position inactive, et un dispositif monté sur l'organe de toucheau de came (44) et destiné à coopérer avec l'organe excentrique (22) afin qu'il ramène l'organe de toucheau de came (44) à la position angulaire prédéterminée par rapport au levier de changement (40) uniquement avant le déplacement du levier de changement avec l'organe de toucheau de came de la position neutre vers la première position, si bien que la bande est toujours d'abord entraînée en sens normal lors du déclenchement du mode d'avance après que le lecteur a été mis en mode d'arrêt.

10. Lecteur d'enregistrements sur bande magnétique selon la revendication 1, dans lequel le bras de blocage (48), dans sa position normale de travail, est destiné à coopérer avec l'organe de toucheau de came (44) afin qu'il bloque cet organe par rapport au levier de changement (40) uniquement lorsque l'organe de toucheau de came a une position angulaire prédéterminée par rapport au levier de changement, et dans lequel l'appareil comporte un dispositif (52, 53) destiné à mettre le levier de changement (40) en position neutre entre la première et la seconde position de travail, à la suite du déplacement de l'organe (16) de sélection de mode d'avance vers la position inactive assurant l'établissement d'un mode d'arrêt du lecteur, un dispositif destiné à écarter l'organe de toucheau de came (44) de la position angulaire prédéterminée par rapport au levier de changement (40) lorsque le bras de blocage (48) est dans sa position inactive, et un dispositif, placé sur l'organe de toucheau de came (44) et destiné à coopérer avec l'organe excentrique (22) afin qu'il ramène l'organe de toucheau de came (44) vers la position angulaire prédéterminée par rapport au levier de changement uniquement avant le déplacement du levier de changement, avec l'organe de toucheau de came, de la position neutre vers la première position, si bien que la bande est toujours entraînée initialement dans le sens normal, après le déclenchement du mode d'avance après le mode d'arrêt.

FIG. 1

FIG. 2

FIG. 3

*F I G. 4*

*F I G. 5*

4

# FIG. 6

EP 0 179 643 B1

*F I G. 7*

FIG. 8

FIG. 9